# EUROPEAN PATENT SPECIFICATION

(11) **EP 3 978 225 B1**
(45) Date of publication and mention of the grant of the patent: **23.08.2023**
(21) Application number: 20020447.7
(22) Date of filing: 02.10.2020
(51) Int. Cl.: B29C 64/112, B29C 64/124, B29C 64/40, B33Y 10/00, B33Y 30/00, B29C 37/00

(54) **METHOD AND DEVICE FOR MANUFACTURING AN OBJECT BY STEREOLITHOGRAPHIC 3D PRINTING**
VERFAHREN UND VORRICHTUNG ZUR HERSTELLUNG EINES GEGENSTANDES DURCH STEREOLITHOGRAPHISCHES 3D-DRUCKEN
PROCÉDÉ ET DISPOSITIF DE FABRICATION D'UN OBJET PAR IMPRESSION 3D STÉRÉOLITHOGRAPHIQUE

(43) Date of publication of application: 06.04.2022
(73) Proprietor: Cubicure GmbH, 1230 Wien (AT)
(72) Inventor: Baumgartner, Sonja, A-1050 Wien (AT); Gmeiner, Robert, A-1050 Wien (AT)
(74) Representative: Keschmann, Marc

(56) References cited:
- EP-A1- 0 655 317
- WO-A1-2014/141250
- WO-A1-2020/003312
- US-A1- 2015 131 074

## Description

The invention refers to a method of manufacturing an object by stereolithographic 3D printing, as disclosed in claim 1, wherein the object is built on a building platform layer-by-layer to obtain a stack of structured layers, wherein each structured layer is obtained by the steps of:
- providing an unstructured layer of photosensitive resin, and
- selectively projecting light onto the unstructured layer according to a desired pattern, thereby curing the photosensitive resin to obtain the structured layer that is structured according to the pattern, wherein the stack of structured layers comprises a first pair of adjoining structured layers, wherein at least a first film of removable material being different from the photosensitive resin is placed onto a first structured layer of said first pair of adjoining structured layers by ejecting drops of the removable material from an ejector, whereafter a second structured layer of said first pair of adjoining structured layers is built on the first film of removable material, thereby arranging the first film of removable material between the first and the second structured layers of said first pair of adjoining structured layers, and wherein in a post-processing step said first film of removable material is subjected to a physical and/or chemical process that causes the first film of removable material to disintegrate or lose its stability and the removable material is removed from the object.

Further, the invention refers to a device for manufacturing an object by stereolithographic 3D printing, as disclosed in claim 16, comprising:
a building platform,
a material carrier,
means for applying an unstructured layer of photosensitive resin onto the building platform or on the partially built object,
a light engine designed for the patterning of light onto the unstructured layer of photosensitive resin, said light engine being adapted to cure the photosensitive resin to obtain the structured layer that is structured according to the pattern,
an ejector for ejecting drops of a removable material onto the structured layer to obtain a film of removable material,
driving means to change the relative position of the building platform, the light engine and the ejector,
a control unit adapted to control the driving means so that in a first relative position the building platform and the object at least partially built thereon are assigned to the light engine to build the structured layer and in a second relative position the building platform and the object at least partially built thereon are assigned to the ejector to apply a film of removable material onto the structured layer,wherein the control unit is configured and programmed to change between the first and the second position according to a predetermined sequence so that a first film of removable material is placed onto a first structured layer of a first pair of adjoining structured layers, whereafter a second structured layer of said first pair of adjoining structured layers is built on the first film of removable material, thereby arranging the first film of removable material between the first and the second structured layers of said first pair of adjoining structured layers.

As used herein, "light" may include any electromagnetic radiation that is able to induce polymerization of a photosensitive resin. The term "light" needs not be restricted to visible light, e.g., the portion of the spectrum that can be perceived by the human eye. The radiation may have a wavelength in the range of 10 nm to 10,000 nm, preferably 100 to 500 nm.

The term "photosensitive resin" may refer to a material that conforms into a hardened polymeric material through a curing process. A photosensitive resin, may include, but is not limited to, a mixture of monomers, oligomers, and photoinitiators. A photosensitive resin may also be referred to as an uncured photopolymer.

"Curing" the photosensitive resin is a process, wherein the photosensitive resin is polymerized or cross-linked as a result of being irradiated by light.

As used herein, a "light engine" is a device that is able to generate dynamic light information according to a predetermined pattern. As an example, LCD-displays, Digital Light Processing (DLP), other active mask projection systems, and/or laser-scanner based systems may be used to selectively project light information on the surface of the photosensitive resin.

Compared to other additive manufacturing technologies, commercially available stereolithography (SLA) printers provide high resolution and surface quality. Further, with certain process adaptions like heating or thin film coating (see, e.g., EP 3284583 A1, EP 3418033 A1 and WO 2014 141250 A1), highly viscous materials, e.g. resins, can be printed, which cannot be processed with any other additive manufacturing technique. Highly viscous materials can lead to advanced mechanical properties of parts printed with stereolithography.

Current stereolithographic processes, however, can only process one material at a time. Another drawback of stereolithography is the necessity of support structures. Both, for top-down and for bottom-up systems, support structures serve to support overhanging parts, undercuts or other segments which are not supported by the main building part. In stereolithography, support structures inherently consist of the same material as the building material. Therefore, the support structures cannot be easily removed by washing or melting but have to be removed mechanically and in many cases manually, e.g. broken off or cut away, leaving marks on the part's surface. Besides a potential damage of the surface, this involves extra time and work requirement. Especially for parts which need debindering and/or sintering after the printing process, e.g. ceramic or metal filled photopolymers, the manual removal of the support structure is time-consuming as well as labor- and tool-intensive and adds further risk to damage the part over the process chain.

Other additive manufacturing technologies, such as Inkjet printing or Fused Filament Fabrication (FFF), can process multiple materials at once. Those systems can often provide a support material for printing the support structures, which is inherently different from the building material. There are several ways to remove this support material, including melting the support material or using a solvent to wash it away. This allows to remove the support material without damaging the printed part's surface. However, printing systems for Fused Filament Fabrication currently lack the accuracy, layer adhesion and surface quality, which is necessary for most industrial applications. Inkjet printing technologies on the other hand have significant limitations regarding viscosity parameters of the photosensitive resin, commonly limited to around 20 mPa·s due to the fluidic restrictions of available print heads. This has a significant influence on the achievable mechanical properties as low viscous monomers usually feature short polymer chains and form dense polymer networks thus resulting in brittle polymer parts.

To overcome certain limitations of the printing processes, different printing strategies can be combined. There are approaches to combine thermoplastics (FFF) with photopolymers from inkjet printheads (e.g. US 10,486,364 B2) as well as SLA systems and inkjet printheads (e.g. US 10,486,364 B2, US 10,449,715 B2, US 2015/131074 A1) for coloring purposes. Multi-material approaches for SLA often imply multiple vats with different resins each (e.g. US 2017/100899 A1). Those approaches, however, often suffer cross-contamination problems between the different materials.

It is an object of the invention to improve a stereolithography based printing method and a device to allow for the placement of support structures that can be easily and controllably removed in a post-processing step without damaging the printed object's surface.

To solve this and other objects, the invention in a first aspect thereof provides for a method of manufacturing an object by stereolithographic 3D printing, wherein the object is built on a building platform layer-by-layer to obtain a stack of structured layers, wherein each structured layer is obtained by the steps of:
- providing an unstructured layer of photosensitive resin, and
- selectively projecting light onto the unstructured layer according to a desired pattern, thereby curing the photosensitive resin to obtain the structured layer that is structured according to the pattern,
   wherein the stack of structured layers comprises a first pair of adjoining structured layers,
   wherein a first film of removable material being different from the photosensitive resin is placed onto a first structured layer of said first pair of adjoining structured layers by ejecting drops of the removable material from an ejector, whereafter a second structured layer of said first pair of adjoining structured layers is built on the first film of removable material, thereby arranging the first film of removable material between the first and the second structured layers of said first pair of adjoining structured layers, and
   wherein in a post-processing step said first film of removable material is subjected to a physical and/or chemical process that causes the first film of removable material to disintegrate or lose its stability and the removable material is removed from the object.

The invention uses a stereolithography based printing process which allows for the processing of mechanically favorable photopolymers and is based on the idea to selectively add an additional substance during the printing process, the additional substance being a removable material. In particular, the invention is based on the idea to arrange a film of a removable material between structured layers of the cured photosensitive resin and thereby provide a temporary interface between different parts of the 3D-printed object, which can easily be disintegrated and removed in a post-processing step. Such a removable interface can be used to separate the 3D-printed object into two or more parts or to remove a supporting structure from the object without negatively affecting its surface.

Since the removable material is not the same material as the photosensitive resin, a post-processing step to remove the removable material can be designed as a process to which only the removable material is responsive, thereby leaving the cured photosensitive resin unaffected. In particular, the post-processing step is designed to subject the film of removable material to a physical and/or chemical process that causes the first film of removable material to disintegrate or lose its stability.

According to a preferred embodiment, the physical and/or chemical process is selected from the group consisting of melting, evaporating, sublimating, swelling and dissolving in a solvent. Thereby, the post-processing step takes advantage of the different physical and/or chemical properties of the cured photosensitive resin and the removable material, and applies a physical and/or chemical process that produces a disintegration reaction, such as melting, evaporating, sublimating, swelling and dissolving in a solvent, only in the removable material, but not in the cured photosensitive resin.

As mentioned in the introduction, using multiple materials in stereolithography process usually requires the use of multiple material reservoirs, such as vats, one for each material, wherein the building platform or the object at least partially built thereon is alternately immersed into said reservoirs. This, however, results in cross-contamination between the different materials, because an un-cured amount of a first material still adhering to the object after a structured layer of the first material has been produced will be transferred into the second material when the object is immersed into the second material, and vice versa.

In order to avoid cross-contamination between the two different materials, the removable material is applied by an ejector that ejects drops of the removable material onto the structured layer made from the photosensitive resin. In particular, the drops are selectively placed at one or more locations of the structured layer, where the removable interface is needed to fulfill the desired function. Preferably, the ejector is designed as an inkjet printhead or as a nozzle or droplet dispenser.

The interface made of the removable material may serve to separate selected parts of the cured photosensitive resin from the 3D-printed object. If the selected parts to be removed are confined by structured layers on both, the upper and the lower side, a removable interface would be advantageous on both sides. Therefore, a preferred embodiment of the invention provides that the stack of structured layers comprises a second pair of adjoining structured layers,
wherein a second film of removable material being different from the photosensitive resin is placed onto a first structured layer of said second pair of adjoining structured layers by ejecting drops of the removable material from an ejector, whereafter a second structured layer of said second pair of adjoining structured layers is built on the second film of removable material, thereby arranging the second film of removable material between the first and the second structured layers of said second pair of adjoining structured layers, and
wherein in the post-processing step said second film of removable material is subjected to a physical and/or chemical process that causes the second film of removable material to disintegrate or lose its stability and the removable material is removed from the object.

An important application of the invention is the removal of support structures that are printed during the manufacturing of the object in order to support overhanging parts or undercuts of the object. The removal is enabled by confining the support structure with a film of removable material on its upper and its lower side. Accordingly, a preferred embodiment of the process of the invention provides that a support structure consisting of the photosensitive resin is created between the first film of removable material and the second film of removable material, wherein in the post-processing step said support structure is removed from the object.

As an alternative or in addition to a support structure that is confined by structured layers on both, its upper and lower sides, each being provided with a film of removable material, a support structure may also be arranged between a structured layer of the object and the building platform. Here, a preferred embodiment of the process of the invention provides that a support structure consisting of the photosensitive resin is created between the first film of removable material and the building platform, wherein in the post-processing step said support structure is removed from the object.

In order to facilitate the separation of the support structure from the building platform, a third film of removable material may be placed onto the building platform by ejecting drops of the removable material from an ejector, before building a first structured layer of photosensitive resin on the building platform. In this way, an additional interface made of the removable material is created between the building platform and the support structure.

The support structure can fill the entire space below an overhanging part or an undercut. However, in order to minimize the amount of photosensitive resin needed for building the support structure, the support structure may comprise a plurality of support elements, such as a plurality of columns.

As commonly practiced in stereolithography 3D printing processes, the support structure is built concurrently with the actual object, so that a preferred embodiment provides that the support structure is built form a plurality of layers of cured photosensitive resin. To this end, a section of the pattern may each be used to build the support structure layer-by-layer.

According to a particularly preferred embodiment, a film of removable material is each arranged between said layers of cured photosensitive resin of the support structure. In this way, the support structure consists of alternating sections made of cured photosensitive resin and of removable material. In other words, the support structure is divided into at least two sections by at least one film of removable material. During the post-processing step, when the removable material is disintegrated or loses its stability, the support structure separates or collapses into at least two sections, i.e. into smaller parts that can be removed more easily. This allows the removal of the support structures from areas of the object that are hard to access or from cavities of the object. Further, this method allows to integrate the removal of the support structure in an automated post-processing and cleaning step, since the removal can be highly independent of the printed part's geometry.

Further, this gives the ability to create movable joints, gears or other types of bearing or moving solutions between parts, subparts or assembly groups in part assemblies of a single printing job or even in assembly groups which cannot be disassembled after printing.

As to the nature of the removable material, any material may be used that can be applied by the ejector in drops and that differs from the cured photosensitive resin in at least one physical and/or chemical property, such as the melting point, the solubility, the boiling point etc.

Preferably, the removable material is a material that is polymerizable and, in its polymerized and pre-polymerized state, can be dissolved or swollen in a solvent. Such a material may therefore consist of at least a polymerizable group, such as acrylates, methacrylates, acrylamides, vinyl ethers or vinyl esters, maleimides, cyclic ethers, isocyanates, amines or other polymerizable unsaturated or saturated groups, and may optionally further comprise at least one hydrophilic or oleophilic group. The polymerized material may be dissolvable or swellable in a solvent, such as water or alcohol or oil or other organic solvents. Such materials for example comprise hydroxy, carbonyl and carboxy groups and derivatives with other electronegative hetero atoms, amines, ionic liquids and salts, for example hydroxyethylmethacrylate (HEMA), 2-(2-ethoxyethoxy)ethyl acrylate (EOEOEA), acryloyl morpholine (ACMO), polyethylene glycol derivates, polyethers, hydroxy ethylene or lauryl acrylates.

According to an alternative preferred embodiment, the removable material is solidified and meltable after the printing process and therefore is a material having a melting point that is below the decomposition temperature of the cured photosensitive resin, such as a melting point of < 200°C, such as long-chain alcohols or waxes.

In order to improve the adhesion of the removable material on the cured photosensitive resin, the structured layer may be pre-treated by means of surface conditioning, e.g. plasma or Corona treatment, before ejecting drops of the removable material from the ejector onto the structured layer.

Since the removable material is applied onto the cured photosensitive resin layer in liquid form, a preferred embodiment provides that the film of removable material is solidified, before a structured layer is built on the film of removable material. Preferably, the film of removable material is subjected to a drying step, solidifying step or a light-curing step before a structured layer is built on the film of removable material. Alternatively, the film of removable material is subjected to hardening or curing by a chemical reaction process which is triggered by surrounding gases like ambient atmosphere or special process gases or process atmospheres or by getting in contact with a second removable material compound which may be ejected by an additional ejector device. In another approach, the film of removable material stays liquid on top of the surface of the cured photosensitive resin layer and might be cured later, at least partially, by the electromagnetic radiation pattern which forms the next layer of cured photosensitive resin. In an alternative approach the film of removable material continues to stay liquid on top of the surface of the cured photosensitive resin layer and even between multiple layers of cured photosensitive resin. However, in such a configuration, the viscosity of the film of removable material might vary or stay the same over the whole printing process and might be influenced in its viscosity by its physical (e.g. process temperature) or chemical (e.g. surrounding gas atmosphere) process environment.

Further, the structured layer may be structured to have a cavity, into which the drops of the removable material are ejected from the ejector. This improves the positioning of the removable material at the desired location.

According to a further aspect of the invention, a device for manufacturing an object by stereolithographic 3D printing is provided, comprising:
a building platform,
a material carrier,
means for applying an unstructured layer of photosensitive resin onto the building platform or on the partially built object,
a light engine designed for the patterning of light onto the unstructured layer of photosensitive resin, said light engine being adapted to cure the photosensitive resin to obtain the structured layer that is structured according to the pattern,
an ejector for ejecting drops of a removable material onto the structured layer to obtain a film of removable material,
driving means to change the relative position of the building platform, the light engine and the ejector,
a control unit adapted to control the driving means so that in a first relative position the building platform and the object at least partially built thereon are assigned to the light engine to build the structured layer and in a second relative position the building platform and the object at least partially built thereon are assigned to the ejector to apply a film of removable material onto the structured layer,
wherein the control unit is configured and programmed to change between the first and the second position according to a predetermined sequence so that a first film of removable material is placed onto a first structured layer of a first pair of adjoining structured layers,; whereafter a second structured layer of said first pair of adjoining structured layers is built on the first film of removable material, thereby arranging the first film of removable material between the first and the second structured layers of said first pair of adjoining structured layers.

Preferably, the control unit is configured and programmed to change between the first and the second position according to a predetermined sequence so that a second film of removable material is placed onto a first structured layer of a second pair of adjoining structured layers, whereafter a second structured layer of said second pair of adjoining structured layers is built on the second film of removable material, thereby arranging the second film of removable material between the first and the second structured layers of said second pair of adjoining structured layers.

Preferably, the control unit is configured and programmed to change between the first and the second position according to a predetermined sequence so that a support structure consisting of at least one structured layer of the photosensitive resin is created between the first film of removable material and the second film of removable material.

Preferably, the control unit is configured and programmed to change between the first and the second position according to a predetermined sequence so that a support structure consisting of at least one structured layer of the photosensitive resin is created between the first film of removable material and the building platform.

Preferably, the control unit is configured and programmed to change between the first and the second position according to a predetermined sequence so that a third film of removable material is placed onto the building platform, before building a first structured layer of photosensitive resin on the building platform.

Preferably, the control unit is configured and programmed to change between the first and the second position according to a predetermined sequence so that the support structure consists of a plurality of structured layers of the photosensitive resin.

Preferably, the control unit is configured and programmed to change between the first and the second position according to a predetermined sequence so that a film of removable material is each arranged between said plurality of structured layers of the support structure.

In the following, the invention will be described in more detail by reference to specific preferred embodiments of the invention.
FIG. 1 shows an example of a material placement strategy for bottom-up stereolithography processes.
FIG. 2 shows an example of a material placement strategy for top-down stereolithography processes.
FIG. 3a shows the side view of a material placement strategy for stereolithographic printing processes with movable SLA printhead.
FIG. 3b shows the top view of a material placement strategy for stereolithographic printing processes with movable SLA printhead.
FIG. 4 illustrates a printed part with an overhanging structure.
FIG. 5a illustrates a printed part with support structures inside a cavity.
Fig. 5b shows a contact region of Fig. 5a in greater detail.
FIG. 6 shows an exemplary part with movable segments.
FIG. 7 illustrates exemplary material placement inside the support structures.
FIG. 8 illustrates exemplary support structure geometries in the interface area between part and support structure.
FIG. 9 shows a flowchart of the printing process.

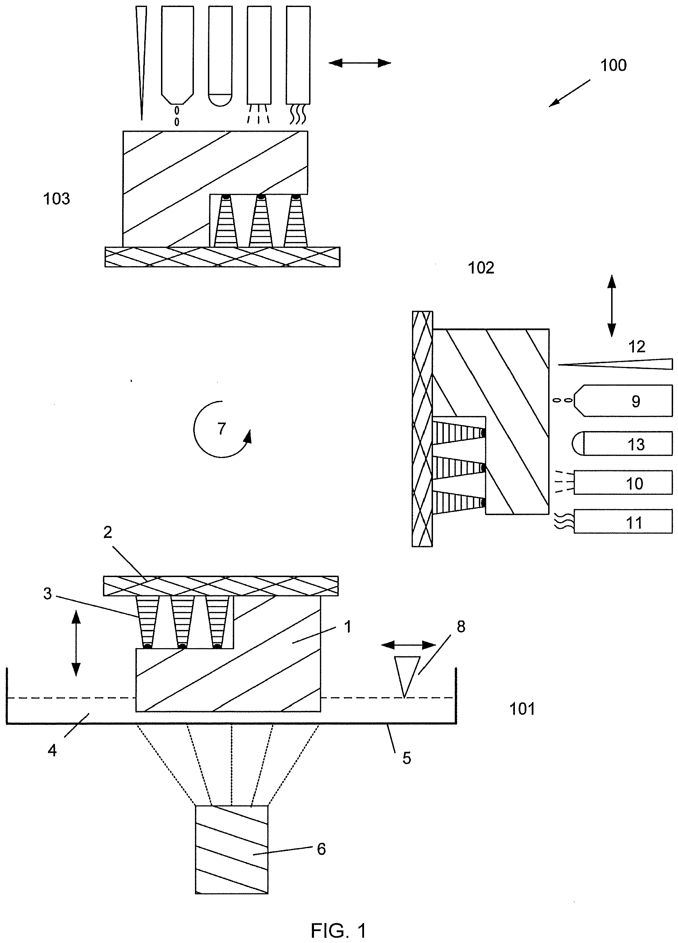

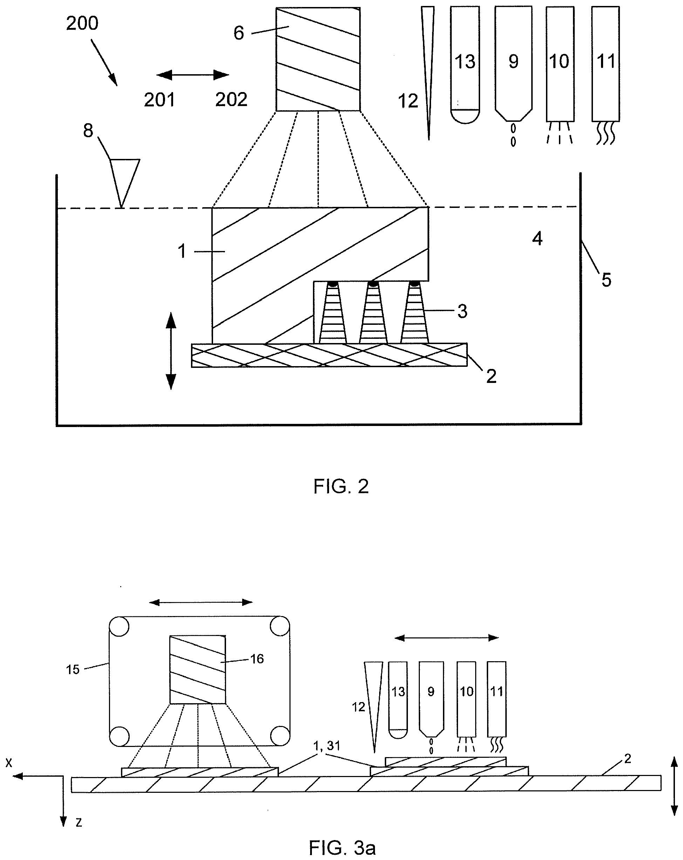

The present invention is a method of additively manufacture parts by selective exposure to light of a filled or unfilled photosensitive resin with a further phase of selectively placed removable material to facilitate support structure removal. Stereolithographic printing systems allow for the processing and selective curing of photosensitive resins of various viscosities, preferably dynamic viscosities between 0,1 Pa.s and 20 Pa.s at predefined process temperature, with or without fillers, with the same material for the printed part itself, as well as for the necessary support structure. To overcome the disadvantage of commonly available printers of being limited to only one material, the multi-material stereolithography printing is achieved by integrating a drop generating device, e.g. an inkjet printhead, a nozzle or pipette, into the printing process, which can selectively place at least one additional material, including a plurality of additional materials. The invention of introducing removable materials as a second or additional phase into the printed object can be applied for all types of stereolithographic printing processes. FIG. 1 and FIG. 2 show schematic illustrations of two different stereolithography printing processes which implemented an ejector to add such second or additional material phase. Besides an ejector for ejecting drops, the unit which moves over the previously cured layer can include a light source, e.g. an LED or UV-lamp, to cure or fix the selectively placed droplets, drop arrays or surface wetting droplet layer. Further, it might contain a heat source to dry the placed material and/or to dry the substrate and/or enforce controlled or uncontrolled evaporation. It might be necessary to prepare the substrate (previously cured layer) with e.g. a wiper blade or an air or gas stream of a defined temperature to dry/clean the surface. It can be further beneficial to use a surface conditioning treatment, e.g. plasma or Corona treatment of the layer surface to allow a defined placement of droplets (e.g. define or influence wetting and bonding behavior of droplet material on the printed layer substrate).

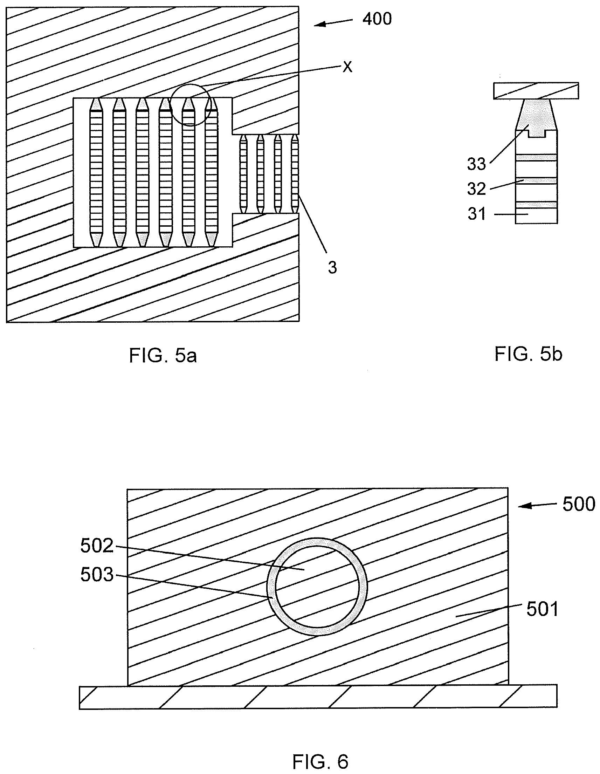

FIG. 1 is a schematic illustration and example of a multi material bottom-up stereolithography printing process 100. The printer 100 consists of a building platform 2, which is rotatable according to arrow 7 between the positions 101, 102 and 103. In position 101 a transparent vat 5 is filled with photosensitive resin 4. The height of this material can be in the range of the printing layer thickness to multiple millimeters. A coater 8 may be installed to coat the vat with new photosensitive material 4. The building platform 2 is lowered into the photosensitive material until a distance of the desired layer height between the building platform 2 (or the part 1 partially built thereon) and the vat 5 is reached. A curing system 6 cures the photosensitive material 4 through the transparent vat 5. This can be for example either a dynamic mask system using a single or multiple LED(s) as light source, a laser scanning system, or an LCD or other actively or passively light exposing display. After curing, the building platform 2 is lifted and the vat 5 may be coated again. With these steps repeated, a three-dimensional part 1 is printed. For certain structures, such a overhangs or cavities, support structures 3 are necessary. The support structures may be divided into different sections, including sections 31 printed from photosensitive resin, sections 32 printed from removable material, such as soluble, swellable, meltable, vaporizable and/or sublimatable material, and an interface section 33 between part 1 and support structure 3 (see Fig. 5b). To print sections 32 and 33, a motor 7 can rotate the printed part 1 to a desired position. In exemplary positions 102 or 103, a drop generating device 9, e.g. an inkjet printhead or a pipette, or a heatable nozzle is moved over the surface of part 1 and places removable material at selected areas. A UV or visible light source 10, matched to the photoinitiator in the removable material, can cure the material to fix it. Alternatively, a heat source 11, e.g. infrared or halogen lamp, can dry the removable material or evaporate components of the removable material (e.g. solvent). If necessary, a scraper 12 or an air or gas stream of a defined temperature can be moved over the surface of part 1 to wipe/blow off excess removable material and prepare the substrate to be jetted upon. To improve wettability and adhesion of the surface of the cured photosensitive resin of part 1 before placing removable material, a surface treatment device 13, e.g. Corona or Plasma treatment, can be installed.

After placement of removable material, the building platform 2 is rotated back into position 101, where the next layer of part 1 is cured, said layer also forming section 31 of the support structure(s).

FIG. 2 illustrates a multi material top-down printing process 200. A building platform 2 immerges into a tank 5, filled with photosensitive resin 4. In position 201, a curing system 6 cures the photosensitive material 4 from above. This can be for example either a dynamic mask system using a LED as light source, a laser scanning system, or an LCD or other actively or passively light exposing display. After curing, the building platform 2 is submerged into the liquid resin and a coater or blade 8 may cover the printed parts with the next layer of uncured resin. With these steps repeated, a three-dimensional part 1 is printed. For certain structures, such as overhangs or cavities, support structures 3 are necessary. The support structures may be divided into different sections, including sections 31 printed from photosensitive resin 31, sections 32 printed from removable material, such as soluble, swellable or meltable material, and an interface section 33 between part 1 and support structure 3. To print sections 32 and 33, after curing a layer 31, a drop generating device 9, e.g. an inkjet printhead or a pipette, or a heatable nozzle is moved over the surface of part 1 to position 202 and places removable material at selected areas. A UV or visible light source 10, matched to the photoinitiator in the removable material, can cure the material to fix it. A heat source 11, e.g. infrared or halogen lamp, can dry the removable material. Before placement of removable material, a wiper or blade 12 or an air or gas stream of a defined temperature might remove residues of uncured resin. To improve the surface quality, a surface treatment device 13, e.g. Corona or plasma treatment can move over the surface of part 1.

FIG. 3a illustrates the side view of an exemplary stereolithography process with a movable printhead 15. The parts 1 are printed onto a building platform 2 which is movable vertically in z-direction. The photosensitive material 31 is applied and cured by the printhead 15 which can be moved horizontally in x-direction. The printhead 15 comprises a circulating or rolling foil which acts as transfer media for the liquid photosensitive resin onto the building platform 2. A curing device 16, e.g. laser scanner, dynamic mask system or LED module, selectively cures the transferred resin through the foil from inside the printhead 15. Behind the printhead 15, drop ejecting devices 9, e.g. an inkjet printhead or a pipette, or (heatable) nozzles can move over the building platform 1 and selectively place a removable material, which is soluble, swellable, meltable, sublimatable or evaporable. A UV or visible light source 10, matched to an optional photoinitiator in the removable material, might cure the removable material to fix it. A heat source 11, e.g. infrared or halogen lamp, might dry the removable material. The surface of part 1 might be prepared via a wiper or blade 12 or an air or gas stream of a defined temperature and/or a surface treatment device 13, e.g. Corona or Plasma treatment. The drop generating devices 9 and the curing and heat treatment devices 10,11 are either attached to the printhead 15 or can be moved separately.

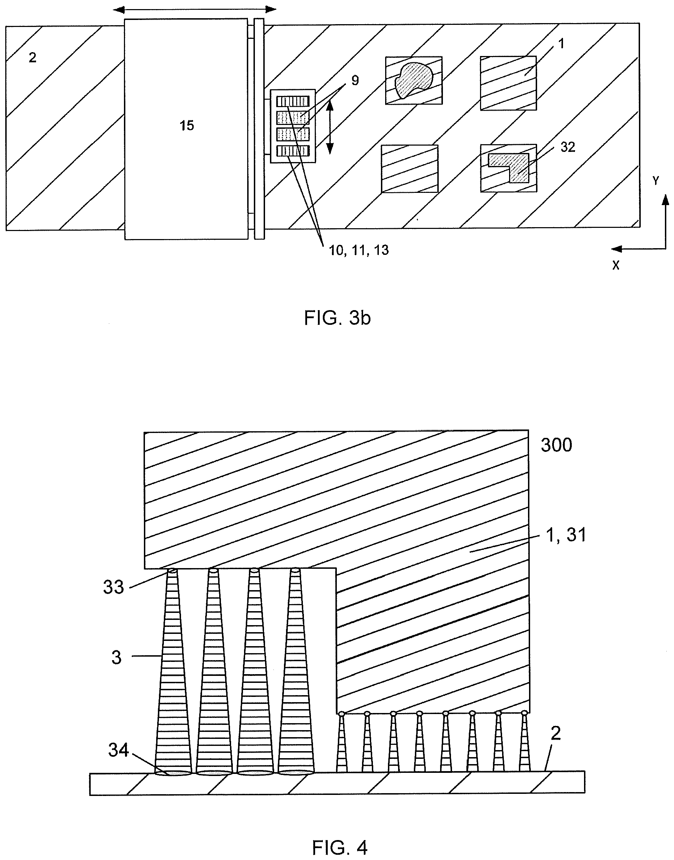

FIG. 3b illustrates the top view of an exemplary stereolithography process with movable printhead(s) 15 for multi-pass printing. The drop generating devices 9 are either mounted on the printhead 15 or can move separately and can move additionally in y-direction to scan a larger build area on building platform 2. The curing devices 10 and heat treatment devices 11 are positioned accordingly in front and behind the drop generating devices 9. To prepare the surface of printed parts 1 before placement of removable material, a wiper or blade or an air or gas stream of a defined temperature might be used and the surface might be treated with surface treatment devices 13, e.g. Corona or Plasma treatment, positioned accordingly before and behind the drop generating devices.

FIG. 4 shows a printed part 300 with overhanging sections, which need support structures 3 to be printed via stereolithography, attached to a building platform 2. The support structures 3 are printed from the same photosensitive resin material as the part 1. In the interface section 33 between the support structure 3 and the part 1, and/or in the interface section 34 between the building platform 2 and the support structure 3 a removable material is placed and solidified, which may be soluble, swellable, meltable, evaporable and/or sublimatable. After the printing process, the part undergoes a postprocessing. To remove the support structure 3 from the printed part 1 and/or the part 1 from the building platform 2, the part 1 and/or the whole building platform 2 can be heated or cooled and/or submerged into a suitable solvent. This allows to destabilize the removable material in sections 33 and/or 34, thereby removing the support structure 3 from the part 1 without damaging the surface of the printed part 1. Also, it prevents the building platform 2 from scratches, otherwise generated by manual removal of the part 1. Further, the removal of the support structures 3 or detaching from the building platform 2 can be integrated into an automatic post process (e.g. UV or thermal post curing) or cleaning step. This can save substantial time effort and manual labor.

FIG. 5a illustrates a part 400 with partially inaccessible cavities, which need support structures 3 to be printed via stereolithography. The support structures 3 consist of layers/sections 31 of cured photosensitive material and layers/sections 32 of a removable material, such as a soluble, swellable, meltable, evaporable and/or sublimatable material, and are attached to part 1 via the interface section 33, as seen in Fig. 5b, which shows section X in greater detail. Inaccessible cavities or overhangs, which need support structures 3 to be printed can be supported with support structures 3 of alternating layers/sections 31 of cured photosensitive material and layers/sections 32 of a removable material. The removable material in sections 32 is dissolved, swelled, melted, evaporated or sublimated after the printing process during a post processing step. In this way, the support structure 3 can be divided into small parts, which then can be washed or blown out from the cavity, or from hard to access or mechanically inaccessible areas.

FIG. 6 illustrates a part 500 with insets, which are intended to be movable, e.g. a shaft. The movable part 502 is mounted inside the printed part 501, separated from part 501 by a removable material section 503. As the removable material in section 503 is removed, such as dissolved, swelled, melted, evaporated or sublimated, after the printing process during a post processing step, the section 503 can be removed from the printed part 500.

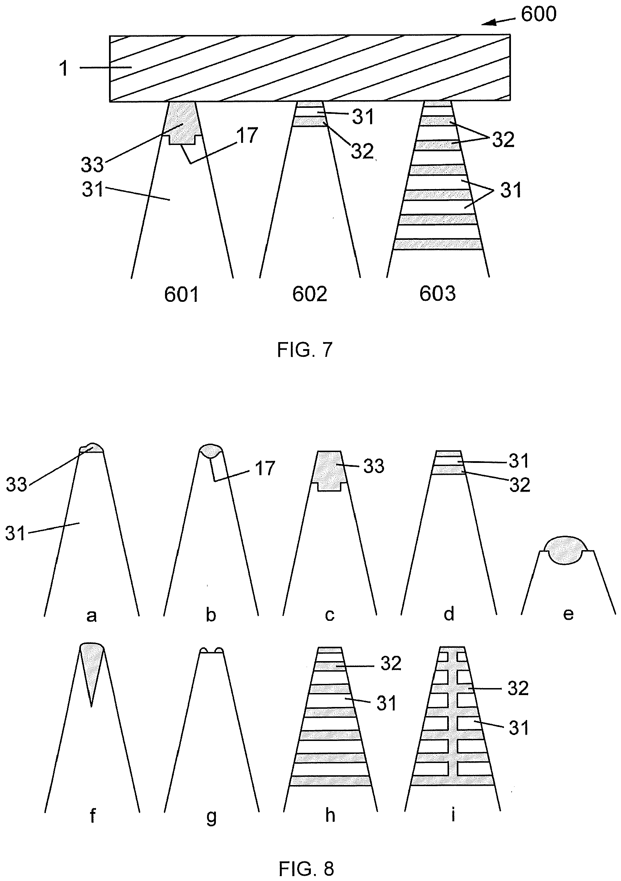

FIG. 7 illustrates different examples of placement of removable material within the support structures 3. Part 1 is printed from photosensitive resin and attached to support structures 3. A base section 31 of the support structures 3 may be constructed from the same photosensitive resin material as part 1 during the layer-by layer construction of part 1. With a drop generating device, drops of a removable material are introduced into the support structure 3 to create sections 32 within the support structure 3. Depending on the size of the support structure 3, its material properties, the compatibility of the photosensitive resin with the removable material, surface tension etc., different geometries of the interface section 33 can be necessary. By melting, dissolving, swelling, evaporating or sublimating of the removable material, the support structures 3 can be removed from part 1. Example 601 shows a cavity 17 in the base section 31 of the support structure 3, to place a larger amount of removable material in the interface section 33 and to exploit rheological properties of the removable material. In example 602, a few alternating layers of photosensitive resin material (sections 31) and removable material (sections 32) are located in the interface area, e.g. to increase the amount of removable material in the interface area. In example 603, multiple layers of photosensitive resin material (sections 31) are separated by layers of removable material (sections 32). Those support structures 3 can be reduced to small pieces by dissolving, swelling, melting, evaporating or sublimating the removable material in sections 32.

FIG. 8 shows further examples of geometries in the interface area between building part 1 and support structure 3. The base section 31 of the support structure 3 consists of the same photosensitive resin material as the building part 1. Sections 32 and/or 33 made from a removable material are selectively placed onto or between the section(s) 31 by a drop generating device, e.g. inkjet printhead or nozzle. The removable material might be cured by a light source or dried by a gas stream or ambient atmosphere after application. Alternatively, the removable material may continue to stay in its original or slightly modified liquid form or solidifies. Fig. 8 illustrates various designs of the sections 32 and/or 33 made of the removable material.
a. The support structure 3 ends with an even surface. The removable material is placed on this surface.
b. The support structure 3 has a round and/or flat cavity 17, to place a larger amount of removable material in the interface section 33.
c. The support structure 3 has an angular and/or deep cavity 17 to place a larger amount of removable material in the interface section 33.
d. Section(s) 32 is/are placed between several layers (sections 31) of the support structure in addition to the interface area.
e. Illustrates a detailed view of (b).
f. The support structure 3 has a tapered cavity 17 to place a larger amount of removable material in the interface section 33. In this way, the amount photosensitive resin is reduced relative to the amount of removable material in the interface area.
g. The selectively placed drops of removable material are not connected.
h. Sections 31 of the support structure 3 are separated by sections 32 made of removable material.
i. Sections 31 of the support structure 3 are separated by sections 32 made of removable material, wherein the sections 32 are interconnected by removable material in building direction.

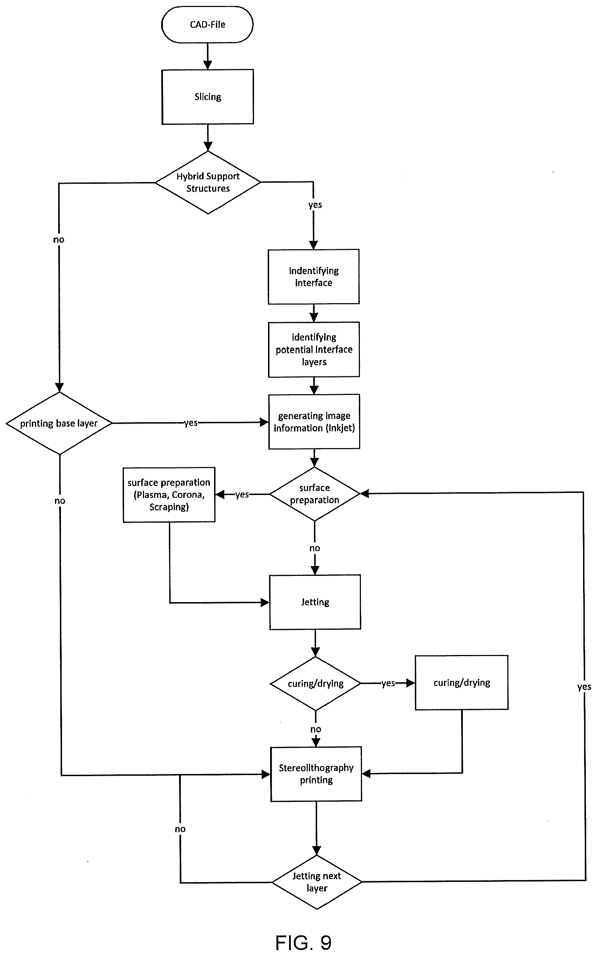

FIG. 9 shows a flowchart of the printing process. First, a CAD file has to be generated and sliced to a defined layer thickness. If hybrid support structures are favorable, there might be two options. Option 1 is to generate a second CAD file of the support structures, which will be sliced accordingly and printed with a second material. Option 2 is to define certain layers of the already existing layer stack, which will be used a second time by the second printing system. The layer information needs to be provided in a suitable file format for the stereolithography part and the drop generating device, e.g. BMP and PNG respectively. If a base layer is preferred, the image information has to be provided in a suitable file format. After curing a stereolithography layer, the surface might need to be prepared for being jetted upon. This includes wiping, drying or certain surface activation processes such as plasma or corona treatment. After the selective drop placement by one or more drop generating devices, e.g. inkjet printheads or (heatable) nozzles, the droplets might need to be cured or fixated. For this purpose, a light source of a suitable wavelength or a heat source, e.g. IR-lamp, or a device generating a gas stream might be installed behind the jetting device. Afterwards the next layer of liquid photosensitive material is placed and cured (stereolithography).

## Claims

1. Method of manufacturing an object (1) by stereolithographic 3D printing, wherein the object is built on a building platform (2) layer-by-layer to obtain a stack of structured layers, wherein each structured layer is obtained by the steps of:
- providing an unstructured layer of photosensitive resin (4), and
- selectively projecting light onto the unstructured layer according to a desired pattern, thereby curing the photosensitive resin to obtain the structured layer that is structured according to the pattern,
wherein the stack of structured layers comprises a first pair of adjoining structured layers,
**characterized in that**
at least a first film (32,33) of removable material being different from the photosensitive resin is placed onto a first structured layer (31) of said first pair of adjoining structured layers by ejecting drops of the removable material from an ejector (9), whereafter a second structured layer (31) of said first pair of adjoining structured layers is built on the first film (32,33) of removable material, thereby arranging the first film (32,33) of removable material between the first and the second structured layers (31) of said first pair of adjoining structured layers, and
wherein in a post-processing step said first film (32,33) of removable material is subjected to a physical and/or chemical process that causes the first film (32,33) of removable material to disintegrate or lose its stability and the removable material is removed from the object (1).

2. Method according to claim 1, wherein said physical and/or chemical process is selected from the group consisting of melting, evaporating, sublimating, swelling and dissolving in a solvent.

3. Method according to claim 1 or 2, wherein the stack of structured layers comprises a second pair of adjoining structured layers,
wherein a second film (32,34) of removable material being different from the photosensitive resin is placed onto a first structured layer (31) of said second pair of adjoining structured layers by ejecting drops of the removable material from an ejector (9), whereafter a second structured layer (31) of said second pair of adjoining structured layers is built on the second film (32,34) of removable material, thereby arranging the second film (32,34) of removable material between the first and the second structured layers (31) of said second pair of adjoining structured layers, and
wherein in the post-processing step said second film of removable material is subjected to a physical and/or chemical process that causes the second film (32,34) of removable material to disintegrate or lose its stability and the removable material is removed from the object (1).

4. Method according to claim 1, 2 or 3, wherein a support structure (3) consisting of the photosensitive resin is created between the first film (33) of removable material and the second film (34) of removable material, wherein in the post-processing step said support structure (3) is removed from the object.

5. Method according to any one of claims 1 to 4, wherein a support structure (3) consisting of the photosensitive resin is created between the first film (33) of removable material and the building platform (2), wherein in the post-processing step said support structure (3) is removed from the object (1) .

6. Method according to claim 5, wherein a third film of removable material is placed onto the building platform (2) by ejecting drops of the removable material from an ejector (9), before building a first structured layer of photosensitive resin on the building platform (2).

7. Method according to claim 4, 5 or 6, wherein the support structure (3) comprises a plurality of columns.

8. Method according to any one of claims 4 to 7, wherein the support structure (3) is built form a plurality of layers (31) of cured photosensitive resin

9. Method according to claim 8, wherein a film (32) of removable material is each arranged between said layers (31) of cured photosensitive resin.

10. Method according to any one of claims 4 to 9, wherein a section of the pattern is each used to build the support structure (3) layer-by-layer.

11. Method according to any one of claims 1 to 10, wherein the post-processing step is conducted after the layer-by-layer construction of the object is terminated.

12. Method according to any one of claims 1 to 11, wherein the removable material
- consists of at least a polymerizable group and optionally at least one hydrophilic or oleophilic group, the photopolymerizable group preferably being selected from acrylates, methacrylates, acrylamides, vinyl ethers, vinyl esters, maleimides, cyclic ethers, isocyanates, amines or other polymerizable unsaturated or saturated groups, wherein the removable material in its polymerized or pre-polymerized state is preferably swellable and/or dissolvable in a solvent and preferably contains hydroxy, carbonyl and carboxy groups and derivatives with other electronegative hetero atoms, amines, ionic liquids and salts, for example hydroxyethylmethacrylate (HEMA), 2-(2-ethoxyethoxy)ethyl acrylate (EOEOEA), acryloyl morpholine (ACMO), polyethylene glycol derivates, polyethers, hydroxy ethylene or lauryl acrylates; or
- is a material having a melting point that is below the decomposition temperature of the cured photosensitive resin, such as, e.g., long-chain alcohols or waxes.

13. Method according to any one of claims 1 to 12, wherein the structured layer is pre-treated by means of a surface conditioning process, such a plasma or Corona treatment, before ejecting drops of the removable material from an ejector onto the structured layer.

14. Method according to any one of claims 1 to 13, wherein the film (32,33) of removable material is subjected to a drying step, solidifying step or a light-curing step before a structured layer is built on the film (32,33) of removable material.

15. Method according to any one of claims 1 to 14, wherein the structured layer is structured to have a cavity, into which the drops of the removable material are ejected from the ejector.

16. A device for manufacturing an object by stereolithographic 3D printing, comprising:
a building platform (2),
a material carrier (5),
means for applying an unstructured layer of photosensitive resin (4) onto the building platform (2) or on the partially built object (1),
a light engine (6) designed for the patterning of light onto the unstructured layer of photosensitive resin (4), said light engine (6) being adapted to cure the photosensitive resin to obtain the structured layer that is structured according to the pattern,
an ejector (9) for ejecting drops of a removable material onto the structured layer to obtain a film of removable material,
driving means (7) to change the relative position of the building platform (2), the light engine (6) and the ejector (9),
a control unit adapted to control the driving means (7) so that in a first relative position the building platform (2) and the object (1) at least partially built thereon are assigned to the light engine (6) to build the structured layer and in a second relative position the building platform (2) and the object (1) at least partially built thereon are assigned to the ejector (9) to apply a film of removable material onto the structured layer,
**characterized in that**
the control unit is configured and programmed to change between the first and the second position according to a predetermined sequence so that a first film (32,33) of removable material is placed onto a first structured layer (31) of a first pair of adjoining structured layers, whereafter a second structured layer (31) of said first pair of adjoining structured layers is built on the first film (32,33) of removable material, thereby arranging the first film (32,33) of removable material between the first and the second structured layers (31) of said first pair of adjoining structured layers.

17. Device according to claim 16, wherein the control unit is configured and programmed to change between the first and the second position according to a predetermined sequence so that a second film (32,34) of removable material is placed onto a first structured layer (31) of a second pair of adjoining structured layers, whereafter a second structured layer (31) of said second pair of adjoining structured layers is built on the second film (32,34) of removable material, thereby arranging the second film (32,34) of removable material between the first and the second structured layers (31) of said second pair of adjoining structured layers.

18. Device according to claim 16 or 17, wherein the control unit is configured and programmed to change between the first and the second position according to a predetermined sequence so that a support structure (3) consisting of at least one structured layer (31) of the photosensitive resin is created between the first film (33) of removable material and the second film (34) of removable material.

19. Device according to claim 16, 17 or 18, wherein the control unit is configured and programmed to change between the first and the second position according to a predetermined sequence so that a support structure (3) consisting of at least one structured layer (31) of the photosensitive resin is created between the first film (33) of removable material and the building platform (2).

20. Device according to claim 19, wherein the control unit is configured and programmed to change between the first and the second position according to a predetermined sequence so that a third film of removable material is placed onto the building platform (2), before building a first structured layer of photosensitive resin on the building platform (2).

21. Device according to any one of claims 18 to 20, wherein the control unit is configured and programmed to change between the first and the second position according to a predetermined sequence so that the support structure (3) consists of a plurality of structured layers (31) of the photosensitive resin.

22. Device according to claim 16, wherein the control unit is configured and programmed to change between the first and the second position according to a predetermined sequence so that a film (32) of removable material is each arranged between said plurality of structured layers (31) of the support structure (3).

## Patentansprüche

1. Verfahren zur Herstellung eines Objekts (1) durch stereolithographischen 3D-Druck, wobei das Objekt auf einer Bauplattform (2) Schicht für Schicht aufgebaut wird, um einen Stapel strukturierter Schichten zu erhalten, wobei jede strukturierte Schicht durch die folgenden Schritte erhalten wird:
- Bereitstellen einer unstrukturierten Schicht aus photosensitivem Harz (4), und
- selektives Projizieren von Licht auf die unstrukturierte Schicht gemäß einem gewünschten Muster, wodurch das photosensitive Harz gehärtet wird, um die strukturierte Schicht zu erhalten, die gemäß dem Muster strukturiert ist,
wobei der Stapel strukturierter Schichten ein erstes Paar aneinandergrenzender strukturierter Schichten umfasst,
**dadurch gekennzeichnet, dass** mindestens ein erster Überzug (32, 33) aus entfernbarem Material, das sich von dem photosensitiven Harz unterscheidet, auf einer ersten strukturierten Schicht (31) des ersten Paars aneinandergrenzender strukturierter Schichten durch Ausstoßen von Tropfen des entfernbaren Materials aus einem Ejektor (9) angeordnet wird, woraufhin eine zweite strukturierte Schicht (31) des ersten Paares aneinandergrenzender strukturierter Schichten auf dem ersten Überzug (32, 33) aus entfernbarem Material aufgebaut wird, wodurch der erste Überzug (32, 33) aus entfernbarem Material zwischen der ersten und der zweiten strukturierten Schicht (31) des ersten Paares aneinandergrenzender strukturierter Schichten angeordnet wird, und
wobei in einem Nachbearbeitungsschritt der erste Überzug (32, 33) aus entfernbarem Material einem physikalischen und/oder chemischen Prozess unterzogen wird, der bewirkt, dass der erste Überzug (32, 33) aus entfernbarem Material zerfällt oder seine Stabilität verliert, und das entfernbare Material von dem Objekt (1) entfernt wird.

2. Verfahren nach Anspruch 1, wobei das physikalische und/oder chemische Verfahren ausgewählt ist aus der Gruppe bestehend aus Schmelzen, Verdampfen, Sublimieren, Quellen und Lösen in einem Lösungsmittel.

3. Verfahren nach Anspruch 1 oder 2, wobei der Stapel strukturierter Schichten ein zweites Paar aneinandergrenzender strukturierter Schichten umfasst,
wobei ein zweiter Überzug (32, 34) aus entfernbarem Material, das sich von dem photosensitiven Harz unterscheidet, auf einer ersten strukturierten Schicht (31) des zweiten Paares angrenzender strukturierter Schichten durch Ausstoßen von Tropfen des entfernbaren Materials aus einem Ejektor (9) angeordnet wird, wonach eine zweite strukturierte Schicht (31) des zweiten Paares angrenzender strukturierter Schichten auf dem zweiten Überzug (32, 34) aus entfernbarem Material aufgebaut wird, wodurch der zweite Überzug (32, 34) aus entfernbarem Material zwischen der ersten und der zweiten strukturierten Schicht (31) des zweiten Paares angrenzender strukturierter Schichten angeordnet wird, und
wobei in dem Nachbearbeitungsschritt der zweite Überzug aus entfernbarem Material einem physikalischen und/oder chemischen Prozess unterzogen wird, der bewirkt, dass der zweite Überzug (32, 34) aus entfernbarem Material zerfällt oder seine Stabilität verliert, und das entfernbare Material von dem Objekt (1) entfernt wird.

4. Verfahren nach Anspruch 1, 2 oder 3, wobei zwischen dem ersten Überzug (33) aus entfernbarem Material und dem zweiten Überzug (34) aus entfernbarem Material eine aus dem photosensitiven Harz bestehende Stützstruktur (3) erzeugt wird, wobei im Nachbearbeitungsschritt die Stützstruktur (3) von dem Objekt entfernt wird.

5. Verfahren nach einem der Ansprüche 1 bis 4, wobei zwischen dem ersten Überzug (33) aus entfernbarem Material und der Bauplattform (2) eine aus dem photosensitiven Harz bestehende Stützstruktur (3) erzeugt wird, wobei im Nachbearbeitungsschritt die Stützstruktur (3) vom Objekt (1) entfernt wird.

6. Verfahren nach Anspruch 5, wobei ein dritter Überzug aus entfernbarem Material auf die Bauplattform (2) aufgebracht wird, indem Tropfen des entfernbaren Materials von einem Ejektor (9) ausgestoßen werden, bevor eine erste strukturierte Schicht aus photosensitivem Harz auf der Bauplattform (2) aufgebaut wird.

7. Verfahren nach Anspruch 4, 5 oder 6, wobei die Stützstruktur (3) eine Vielzahl von Säulen umfasst.

8. Verfahren nach einem der Ansprüche 4 bis 7, wobei die Stützstruktur (3) aus einer Vielzahl von Schichten (31) aus gehärtetem photosensitiven Harz aufgebaut ist.

9. Verfahren nach Anspruch 8, wobei zwischen den Schichten (31) aus gehärtetem photosensitiven Harz jeweils ein Überzug (32) aus entfernbarem Material angeordnet ist.

10. Verfahren nach einem der Ansprüche 4 bis 9, wobei jeweils ein Abschnitt des Musters zum schichtweisen Aufbau der Stützstruktur (3) verwendet wird.

11. Verfahren nach einem der Ansprüche 1 bis 10, wobei der Nachbearbeitungsschritt durchgeführt wird, nachdem der schichtweise Aufbau des Objekts beendet ist.

12. Verfahren nach einem der Ansprüche 1 bis 11, wobei das entfernbare Material
- aus mindestens einer polymerisierbaren Gruppe und gegebenenfalls mindestens einer hydrophilen oder oleophilen Gruppe besteht, wobei die photopolymerisierbare Gruppe vorzugsweise aus Acrylaten, Methacrylaten, Acrylamiden, Vinylethern, Vinylestern, Maleinimiden, cyclischen Ethern, Isocyanaten, Aminen oder anderen polymerisierbaren ungesättigten oder gesättigten Gruppen ausgewählt ist, wobei das entfernbare Material in seinem polymerisierten oder vorpolymerisierten Zustand vorzugsweise in einem Lösungsmittel quellbar und/oder löslich ist und vorzugsweise Hydroxy-, Carbonyl- und Carboxygruppen und Derivate mit anderen elektronegativen Heteroatomen, Aminen, ionischen Flüssigkeiten und Salzen enthält, zum Beispiel Hydroxyethylmethacrylat (HEMA), 2-(2-Ethoxyethoxy)ethylacrylat (EOEOEA), Acryloylmorpholin (ACMO), Polyethylenglykolderivate, Polyether, Hydroxyethylen- oder Laurylacrylate; oder
- ein Material mit einem Schmelzpunkt ist, der unter der Zersetzungstemperatur des gehärteten photosensitiven Harzes liegt, wie z.B. langkettige Alkohole oder Wachse.

13. Verfahren nach einem der Ansprüche 1 bis 12, wobei die strukturierte Schicht durch ein Oberflächenkonditionierungsverfahren, wie eine Plasma- oder Corona-Behandlung, vorbehandelt wird, bevor Tropfen des entfernbaren Materials aus einem Ejektor auf die strukturierte Schicht ausgestoßen werden.

14. Verfahren nach einem der Ansprüche 1 bis 13, wobei der Überzug (32, 33) aus entfernbarem Material einem Trocknungsschritt, einem Verfestigungsschritt oder einem Lichthärtungsschritt unterzogen wird, bevor eine strukturierte Schicht auf dem Überzug (32, 33) aus entfernbarem Material aufgebaut wird.

15. Verfahren nach einem der Ansprüche 1 bis 14, wobei die strukturierte Schicht so aufgebaut ist, dass sie einen Hohlraum aufweist, in den die Tropfen des entfernbaren Materials aus dem Ejektor ausgestoßen werden.

16. Vorrichtung zur Herstellung eines Objekts durch stereolithografisches 3D-Drucken, umfassend:
eine Bauplattform (2),
einen Materialträger (5),
Mittel zum Aufbringen einer unstrukturierten Schicht aus photosensitivem Harz (4) auf die Bauplattform (2) oder auf das teilweise gebaute Objekt (1),
einen Lichtgenerator (6), der für die Musterung von Licht auf die unstrukturierte Schicht aus photosensitivem Harz (4) ausgelegt ist, wobei der Lichtgenerator (6) so beschaffen ist, dass er das photosensitive Harz härtet, um die strukturierte Schicht zu erhalten, die entsprechend dem Muster strukturiert ist,
einen Ejektor (9) zum Ausstoßen von Tropfen eines entfernbaren Materials auf die strukturierte Schicht, um einen Überzug aus entfernbarem Material zu erhalten,
Antriebsmittel (7) zur Veränderung der relativen Position der Bauplattform (2), des Lichtgenerators (6) und des Ejektors (9),
eine Steuereinheit, die geeignet ist, die Antriebsmittel (7) so zu steuern, dass in einer ersten Relativposition die Bauplattform (2) und das darauf zumindest teilweise aufgebaute Objekt (1) dem Lichtgenerator (6) zugeordnet sind, um die strukturierte Schicht aufzubauen, und in einer zweiten Relativposition die Bauplattform (2) und das darauf zumindest teilweise aufgebaute Objekt (1) dem Ejektor (9) zugeordnet sind, um einen Überzug aus entfernbarem Material auf die strukturierte Schicht aufzubringen,
**dadurch gekennzeichnet, dass** die Steuereinheit so konfiguriert und programmiert ist, dass sie zwischen der ersten und der zweiten Position gemäß einer vorbestimmten Sequenz wechselt, so dass ein erster Überzug (32, 33) aus entfernbarem Material auf einer ersten strukturierten Schicht (31) eines ersten Paars angrenzender strukturierter Schichten angeordnet wird, woraufhin eine zweite strukturierte Schicht (31) des ersten Paares angrenzender strukturierter Schichten auf dem ersten Überzug (32, 33) aus entfernbarem Material aufgebaut wird, wodurch der erste Überzug (32, 33) aus entfernbarem Material zwischen der ersten und der zweiten strukturierten Schicht (31) des ersten Paares angrenzender strukturierter Schichten angeordnet wird.

17. Vorrichtung nach Anspruch 16, wobei die Steuereinheit so konfiguriert und programmiert ist, dass sie zwischen der ersten und der zweiten Position gemäß einer vorbestimmten Sequenz wechselt, so dass ein zweiter Überzug (32, 34) aus entfernbarem Material auf eine erste strukturierte Schicht (31) eines zweiten Paares von benachbarten strukturierten Schichten angeordnet wird, woraufhin eine zweite strukturierte Schicht (31) des zweiten Paares angrenzender strukturierter Schichten auf dem zweiten Überzug (32, 34) aus entfernbarem Material aufgebaut wird, wodurch der zweite Überzug (32, 34) aus entfernbarem Material zwischen der ersten und der zweiten strukturierten Schicht (31) des zweiten Paares angrenzender strukturierter Schichten angeordnet wird.

18. Vorrichtung nach Anspruch 16 oder 17, wobei die Steuereinheit so konfiguriert und programmiert ist, dass sie zwischen der ersten und der zweiten Position gemäß einer vorbestimmten Sequenz wechselt, so dass eine Stützstruktur (3), die aus mindestens einer strukturierten Schicht (31) des photosensitiven Harzes besteht, zwischen dem ersten Überzug (33) aus entfernbarem Material und dem zweiten Überzug (34) aus entfernbarem Material erzeugt wird.

19. Vorrichtung nach Anspruch 16, 17 oder 18, wobei die Steuereinheit so konfiguriert und programmiert ist, dass sie zwischen der ersten und der zweiten Position gemäß einer vorbestimmten Sequenz wechselt, so dass eine Stützstruktur (3), die aus mindestens einer strukturierten Schicht (31) des photosensitiven Harzes besteht, zwischen dem ersten Überzug (33) aus entfernbarem Material und der Bauplattform (2) erzeugt wird.

20. Vorrichtung nach Anspruch 19, wobei die Steuereinheit so konfiguriert und programmiert ist, dass sie zwischen der ersten und der zweiten Position gemäß einer vorbestimmten Sequenz wechselt, so dass ein dritter Überzug aus entfernbarem Material auf die Bauplattform (2) abgelegt wird, bevor eine erste strukturierte Schicht aus photosensitivem Harz auf der Bauplattform (2) aufgebaut wird.

21. Vorrichtung nach einem der Ansprüche 18 bis 20, wobei die Steuereinheit so konfiguriert und programmiert ist, dass sie zwischen der ersten und der zweiten Position gemäß einer vorbestimmten Sequenz wechselt, so dass die Stützstruktur (3) aus einer Vielzahl von strukturierten Schichten (31) des photosensitiven Harzes besteht.

22. Vorrichtung nach Anspruch 16, wobei die Steuereinheit so konfiguriert und programmiert ist, dass sie zwischen der ersten und der zweiten Position gemäß einer vorbestimmten Sequenz wechselt, so dass ein Überzug (32) aus entfernbarem Material jeweils zwischen der Vielzahl von strukturierten Schichten (31) der Stützstruktur (3) angeordnet ist.

## Revendications

1. Procédé de fabrication d'un objet (1) par impression 3D stéréolithographique, dans lequel l'objet est construit sur une plate-forme de construction (2) couche par couche pour obtenir une pile de couches structurées, dans lequel chaque couche structurée est obtenue par les étapes suivantes consistant à :
- fournir une couche non structurée de résine photosensible (4), et
- projeter sélectivement de la lumière sur la couche non structurée selon un motif désiré, ce qui durcit la résine photosensible pour obtenir la couche structurée qui est structurée selon le motif,
dans lequel la pile de couches structurées comprend une première paire de couches structurées adjacentes,
**caractérisé en ce que**
au moins un premier film (32,33) de matériau amovible différent de la résine photosensible est placé sur une première couche structurée (31) de ladite première paire de couches structurées adjacente en éjectant des gouttes du matériau amovible à partir d'un éjecteur (9), puis une deuxième couche structurée (31) de ladite première paire de couches structurées adjacente est construite sur le premier film (32,33) de matériau amovible, disposant ainsi le premier film (32,33) de matériau amovible entre la première et la deuxième couches structurées (31) de ladite première paire de couches structurées adjacente, et
dans lequel, dans une étape de post-traitement, ledit premier film (32,33) de matériau amovible est soumis à un processus physique et/ou chimique qui entraîne la désintégration ou la perte de stabilité du premier film (32,33) de matériau amovible, et le matériau amovible est retiré de l'objet (1),

2. Procédé selon la revendication 1, dans lequel ledit processus physique et/ou chimique est choisi dans le groupe constitué par la fusion, l'évaporation, la sublimation, le gonflement et la dissolution dans un solvant.

3. Procédé selon la revendication 1 ou 2, dans lequel l'empilement de couches structurées comprend une deuxième paire de couches structurées adjacentes,
dans lequel un deuxième film (32,34) de matériau amovible différent de la résine photosensible est placé sur une première couche structurée (31) de ladite deuxième paire de couches structurées adjacente en éjectant des gouttes du matériau amovible à partir d'un éjecteur (9), puis une deuxième couche structurée (31) de ladite deuxième paire de couches structurées adjacente est construite sur le deuxième film (32,34) de matériau amovible, ce qui permet de disposer le deuxième film (32,34) de matériau amovible entre la première et la deuxième couches structurées (31) de ladite deuxième paire de couches structurées adjacentes, et
dans lequel, lors de l'étape de post-traitement, ledit deuxième film de matériau amovible est soumise à un processus physique et/ou chimique qui entraîne la désintégration ou la perte de stabilité du deuxième film (32, 34) de matériau amovible, et le matériau amovible est retiré de l'objet (1),

4. Procédé selon la revendication 1, 2 ou 3, dans lequel une structure de support (3) constituée de résine photosensible est créée entre le premier film (33) de matériau amovible et le deuxième film (34) de matériau amovible, et dans lequel, lors de l'étape de post-traitement, ladite structure de support (3) est retirée de l'objet.

5. Procédé selon l'une quelconque des revendications 1 à 4, dans lequel une structure de support (3) constituée de résine photosensible est créée entre le premier film (33) de matériau amovible et la plate-forme de construction (2), dans lequel ladite structure de support (3) est retirée de l'objet (1) lors de l'étape de post-traitement.

6. Procédé selon la revendication 5, dans lequel un troisième film de matériau amovible est placé sur la plate-forme de construction (2) en éjectant des gouttes du matériau amovible à partir d'un éjecteur (9), avant de construire une première couche structurée de résine photosensible sur la plate-forme de construction (2).

7. Procédé selon la revendication 4, 5 ou 6, dans lequel la structure de support (3) comprend plusieurs colonnes.

8. Procédé selon l'une quelconque des revendications 4 à 7, dans lequel la structure de support (3) est constituée de plusieurs couches (31) de résine photosensible durcie.

9. Procédé selon la revendication 8, dans lequel un film (32) de matériau amovible est disposé entre lesdites couches (31) de résine photosensible durcie.

10. Procédé selon l'une quelconque des revendications 4 à 9, dans lequel une section du motif est utilisée pour construire la structure de support (3) couche par couche.

11. Procédé selon l'une quelconque des revendications 1 à 10, dans lequel l'étape de post-traitement est effectuée après la fin de la construction couche par couche de l'objet.

12. Procédé selon l'une quelconque des revendications 1 à 11, dans lequel le matériau amovible
- est constitué d'au moins un groupe polymérisable et éventuellement d'au moins un groupe hydrophile ou oléophile, le groupe photopolymérisable étant de préférence choisi parmi les acrylates, les méthacrylates, les acrylamides, les éthers de vinyle, les esters de vinyle, les maléimides, les éthers cycliques, les isocyanates, les amines ou d'autres groupes insaturés ou saturés polymérisables, dans lequel le matériau amovible à l'état polymérisé ou pré-polymérisé est de préférence gonflable et/ou dissoluble dans un solvant et contient de préférence des groupes hydroxy, carbonyle et carboxy et des dérivés avec d'autres hétéroatomes électronégatifs, des amines, des liquides ioniques et des sels, par exemple l'hydroxyléthylméthacrylate (HEMA), l'acrylate de 2-(2-éthoxyéthoxy)éthyle (EOEOEA), la morpholine acrylique (ACMO), les dérivés de polyéthylène glycol, les polyéthers, les hydroxyéthylène ou acrylates de lauryle ; ou
- est une matière dont le point de fusion est inférieur à la température de décomposition de la résine photosensible polymérisée, telle que, par exemple, les alcools à longue chaîne ou les cires.

13. Procédé selon l'une quelconque des revendications 1 à 12, dans lequel
la couche structurée est prétraitée au moyen d'un processus de conditionnement de surface, tel qu'un traitement plasma ou Corona, avant d'éjecter des gouttes du matériau amovible à partir d'un éjecteur sur la couche structurée.

14. Procédé selon l'une quelconque des revendications 1 à 13, dans lequel le film (32,33) de matériau amovible est soumis à une étape de séchage de solidification ou une étape de photopolymérisation avant qu'une couche structurée ne soit construite sur le film (32,33) de matériau amovible.

15. Procédé selon l'une quelconque des revendications 1 à 14, dans lequel la couche structurée est structurée de manière à présenter une cavité dans laquelle les gouttes du matériau amovible sont éjectées de l'éjecteur.

16. Dispositif de fabrication d'un objet par impression 3D stéréolithographique, comprenant :
une plate-forme de construction (2),
un support de matériau (5),
des moyens pour appliquer une couche non structurée de résine photosensible (4) sur la plate-forme de construction (2) ou sur l'objet partiellement construit (1),
un moteur d'éclairage (6) conçu pour l'application structurée de lumière sur la couche non structurée de résine photosensible (4), ledit moteur d'éclairage (6) étant adapté pour durcir la résine photosensible afin d'obtenir la couche structurée qui est structurée selon le motif,
un éjecteur (9) pour éjecter des gouttes d'un matériau amovible sur la couche structurée afin d'obtenir un film de matériau amovible,
des moyens d'entraînement (7) pour modifier la position relative de la plate-forme de construction (2), du moteur d'éclairage (6) et de l'éjecteur (9),
une unité de commande adaptée pour commander les moyens d'entraînement (7) de sorte que, dans une première position relative, la plate-forme de construction (2) et l'objet (1) au moins partiellement construit sur celle-ci soient affectés au moteur d'éclairage (6) pour construire la couche structurée et que, dans une deuxième position relative, la plate-forme de construction (2) et l'objet (1) au moins partiellement construit sur celle-ci soient affectés à l'éjecteur (9) pour appliquer un film de matériau amovible sur la couche structurée,
**caractérisé en ce que**
dans lequel l'unité de commande est configurée et programmée pour
passer de la première à la deuxième position selon une séquence prédéterminée de sorte qu'un premier film (32, 33) de matériau amovible soit placé sur une première couche structurée (31) d'une première paire de couches structurées adjacentes, après quoi une deuxième couche structurée (31) de ladite première paire de couches structurées adjacentes est construite sur le premier film (32, 33) de matériau amovible, ce qui permet de disposer le premier film (32,33) de matériau amovible entre la première et la deuxième couche structurée (31) de ladite première paire de couches structurées adjacentes,

17. Dispositif selon la revendication 16, dans lequel l'unité de commande est configurée et programmée pour passer de la première à la deuxième position selon une séquence prédéterminée de sorte qu'un deuxième film (32,34) de matériau amovible est placé sur une première couche structurée (31) d'une deuxième paire de couches structurées adjacentes, après quoi une deuxième couche structurée (31) de ladite deuxième paire de couches structurées adjacentes est construite sur le deuxième film (32,34) de matériau amovible, disposant ainsi le deuxième film (32,34) de matériau amovible entre la première et la deuxième couche structurée (31) de ladite deuxième paire de couches structurées adjacentes.

18. Dispositif selon la revendication 16 ou 17, dans lequel l'unité de commande est configurée et programmée pour passer de la première à la deuxième position selon une séquence prédéterminée de sorte qu'une structure de support (3) constituée d'au moins une couche structurée (31) de résine photosensible est créée entre le premier film (33) de matériau amovible et le deuxième film (34) de matériau amovible,

19. Dispositif selon la revendication 16, 17 ou 18, dans lequel le
l'unité de commande est configurée et programmée pour passer de la première à la deuxième position selon une séquence prédéterminée de sorte qu'une structure de support (3) constituée d'au moins une couche structurée (31) de la résine photosensible est créé entre le premier film (33) de matériau amovible et la plate-forme de construction (2).

20. Dispositif selon la revendication 19, dans lequel l'unité de commande est configurée et programmée pour passer de la première à la deuxième position selon une séquence prédéterminée, de sorte qu'un troisième film de matériau amovible soit placé sur la plate-forme de construction (2), avant la construction d'une première couche structurée de résine photosensible sur la plate-forme de construction (2),

21. Dispositif selon l'une quelconque des revendications 18 à 20, dans lequel l'unité de commande est configurée et programmée pour passer de la première à la deuxième position selon une séquence prédéterminée, de sorte que la structure de support (3) soit constituée d'une pluralité de couches structurées (31) de résine photosensible.

22. Dispositif selon la revendication 16, dans lequel l'unité de commande est configurée et programmée pour passer de la première à la deuxième position selon une séquence prédéterminée de sorte qu'un film (32) de matériau amovible est disposé entre la pluralité de couches structurées (31) de la structure de support (3).
